# EUROPÄISCHE PATENTSCHRIFT

(11) **EP 1 451 534 B1**
(45) Veröffentlichungstag und Bekanntmachung des Hinweises auf die Patenterteilung: **16.09.2015**
(21) Anmeldenummer: 02804207.5
(22) Anmeldetag: 30.11.2002
(51) Int. Cl.: G01F 1/84, B21D 39/06

(54) **CORIOLISDURCHFLUSSMESSER MIT EINEM GERADROHR**
CORIOLIS FLOWMETER COMPRISING A STRAIGHT TUBE
DEBITMETRE DE CORIOLIS A TUBE RECTILIGNE

(43) Veröffentlichungstag der Anmeldung: 01.09.2004
(73) Patentinhaber: Endress + Hauser Flowtec AG, 4153 Reinach/BL (CH)
(72) Erfinder: ANKLIN, Martin, CH-4147 Aesch (CH); LORENZ, Rainer, 79540 Lörrach (DE)
(74) Vertreter: Andres, Angelika Maria
(86) Internationale Anmeldenummer: PCT/EP2002/013539
(87) Internationale Veröffentlichungsnummer: WO 2003/048693

(56) Entgegenhaltungen:
- EP-A1- 0 598 287
- EP-A2- 1 113 248
- DE-A- 3 724 675
- US-A- 4 090 382
- US-A- 5 610 342
- US-A- 5 691 485

## Beschreibung

Die Erfindung betrifft einen Meßaufnehmer vom Vibrationstyp. Insbesondere beschäftigt sich die Erfindung mit der Fixierung von Meßrohren eines solchen Meßaufnehmers vom Vibrationstyp, insb. eines nach dem Coriolis-Prinzip arbeitenden Massedurchflußaufnehmers, in einem der Halterung des Meßrohrs dienenden Träger.

Prinzipiell gibt es bei derartigen, dem Messen eines in einer Rohrleitung strömenden Fluids dienenden "In-Line" Meßaufnehmern nur zwei Arten von Rohrverläufen, nämlich einerseits gerade Meßrohre und andererseits beliebig gebogene oder sogar gewundene Meßrohr-Schleifen, unter denen die U-förmigen die bevorzugten Rohrformen sind. So sind z.B. in der EP-A 598 287, der EP-A 1 113 248, der US-A 41 27 028, der US-A 45 24 610, der US-A 47 68 384, der US-A 47 93 191, der US-A 48 23 614, der US-A 52 53 533, der US-A 56 10 342, der US-A 60 06 609 oder in der nicht vorveröffentlichten eigenen europäischen Patentanmeldung 01 112 546.5 Meßaufnehmer vom Vibrationstyp, insb. zum Erzeugen von massedurchflußabhängigen Corioliskräften in strömenden Fluiden und/oder zum Erzeugen von viskositätsabhängigen Reibungskräften, beschrieben
- mit wenigstens einem ein Einlaßende und ein Auslaßende aufweisenden, zumindest zeitweise vibrierenden Meßrohr zum Führen eines Fluids, welches Meßrohr
   -- zum Hindurchströmenlassen des Fluids über ein in das Einlaßende mündendes erstes Rohrsegment und über ein in das Auslaßende mündendes zweites Rohrsegment mit einer angeschlossenen Rohrleitung kommuniziert und
   -- im Betrieb mechanische Schwingungen um eine die beiden Rohrsegmente imaginär verbindende Schwingungsachse ausführt sowie
- mit einem Träger zum schwingfähigen Haltern des Meßrohrs, der mittels eines ersten Übergangstücks am ersten Rohrsegment und mittels eines zweiten Übergangstücks am zweiten Rohrsegment fixiert ist.

Insbesondere bei dem Messen von Massedurchflüssen dienenden Coriolis-Massedurchflußaufnehmern werden bei beiden Arten von Rohrverläufen aus Symmetriegründen zumeist zwei im Ruhezustand in zwei parallelen Ebenen parallel zueinander verlaufende und zumeist auch parallel vom Fluid durchströmte gerade Meßrohre bzw. entsprechende Meßrohr-Schleifen verwendet. Zu der einen der beiden Varianten mit zwei parallelen geraden Rohren kann rein beispielsweise auf die US-A 47 68 384, die US-A 47 93 191 und die US-A 56 10 342 sowie zu der anderen Variante mit zwei parallelen, insb. identisch geformten, U-förmigen Rohrschleifen z.B. auf die US-A 41 27 028 verwiesen werden.

Neben den vorbeschriebenen Typen von nach dem Coriolis-Prinzip arbeitenden Massedurchflußaufnehmern mit Doppel-Meßrohranordnung hat sich bereits seit längerem ein weiterer Typ Meßaufnehmer am Markt etabliert, nämlich solche mit einem einzigen geraden oder gebogenen Meßrohr. Derartige Meßaufnehmer sind z.B. in der US-A 45 24 610, der US-A 48 23 614, der US-A 52 53 533, der US-A 60 06 609 oder in der nicht vorveröffentlichten europäischen Patentanmeldung 01 112 546.5 beschrieben.

Ferner ist in der US-A 48 23 614 beschrieben, daß die jeweilige Ende des einen Meßrohrs in eine jeweilige Bohrung eines einlaßseitigen bzw. eines auslaßseitigen Übergangsstücks eingesteckt und darin durch stirnseitiges und rückseitiges Schweißen, Löten oder Hartlöten fixiert sind, vgl. die in einigen der Figuren zu sehenden Materialwülste. Die Übergangsstücke sind ihrerseits in einem äußeren Träger fixiert.

Wie bereits in der US-A 56 10 342 disskutiert, hinterläßt die während des erwähnten Schweißens, Lötens oder Hartlötens nötige Wärmezufuhr an den Fixierstellen der Meßrohre mit den Übergangsstücken nach dem Abkühlen einen mechanischen Spannungszustand, der zu Spannungsriß-Korrosion führen kann, insb. wenn Fluide geMeßen werden, die das Meßrohr-Material mehr oder weniger stark angreifen. Zur möglichst vollständigen Beseitigung dieser Gefahr von Spannungsriß-Korrosion bei Meßrohren von Coriolis-Massedurchflußaufnehmern wurde ebenfalls in der US-A 56 10 342 ein verbessertes Fixier-Verfahren für Meßrohre in Übergangsstücken vorgeschlagen, bei dem jedes Ende des Meßrohrs in eine entsprechende Bohrung eines einlaßseitigen bzw. eines auslaßseitigen Übergangsstücks eingesteckt und mittels eines in das Ende eingebrachten Walzwerkzeugs mit der Innenwand der Bohrung ohne Wärmezufuhr verpreßt wird. Ein für dieses Verfahren entsprechend geeignetes Walzwerkzeug ist beispielsweise auch in der US-A 40 90 382 zum Befestigen von Rohren von Boilern oder Wärmetauschern beschrieben.

Untersuchungen an nach diesem Verfahren gefertigten Meßaufnehmern haben jedoch gezeigt, daß die üblicherweise unterschiedlichen Ausdehnungsverhalten der oben erwähnten Übergangsstücke und des darin jeweils eingespannten Meßrohrs dazu führen können, daß die durch die Übergangsstücke auf das Meßrohr ausgeübten Einspannkräfte bei Temperaturschwankungen, insb. bei allfälligen Temperaturschocks wie sie z.B. bei turnusmäßig durchgeführten Reinigungsmaßnahmen mit extrem heißen Spülflüssigkeiten auftreten können, unter einen kritischen Wert sinken können. Dies wiederum kann bedeuten, daß Übergangsstück und Meßrohr aufgrund von thermisch bedingten Ausdehnungen den durch das Walzen herbeigeführten mechanischen Kontakt verlieren und somit der Träger gegen das Meßrohr um die oben erwähnte Schwingungsachse verdrehbar wird. Für denn dann, insb. bei Meßaufnehmern mit im Betrieb auch Torsionsschwingungen um die Schwingungsachse ausführenden Meßrohren, nicht mehr sicher auszuschließenden Fall eines Verdrehens des Trägers wäre ein Auswechseln des gesamten Meßgeräts praktisch unvermeidlich.

Ausgehend von den vorbeschriebenen Nachteilen des Standes der Technik besteht daher eine Aufgabe der Erfindung darin, Meßaufnehmer der beschriebenen Art dahingehend zu verbessern, daß unter Beibehaltung der durch das Walzen der Meßrohren für die Herstellung von Meßaufnehmern gewonnen Vorteile ein gegenseitiges Verdrehen von Träger und Meßrohr auch bei thermisch bedingten Ausdehnungen weitgehend ausgeschlossen werden kann.

Zur Lösung der Aufgabe besteht die Erfindung in einem Meßaufnehmer vom Vibrationstyp gemäss den unabhängigen Ansprüchen 1 und 4.

Die Erfindung sowie vorteilhafte Ausgestaltungen werden nun anhand von Zeichnungen näher erläutert,
Fig. 1 zeigt perspektivisch-schematisch in teilweise geschnittener Ansicht einen für die Erfindung wesentlichen Teil eines Ausführungsbeispiels eines Massedurchflußaufnehmers mit wenigstens einem Meßrohr,
Fig. 2 zeigt perspektivisch-schematisch in teilweise geschnittener Ansicht ein Ausführungsbeispiel für eine als Anschlag zum verdrehungssicheren Haltern des Meßrohrs von Fig. 1 dienende Nut,
Fig. 3 zeigt die Nut gemäß Fig. 2 in einer Frontansicht und
Fig. 4 zeigt schematisch einen Verfahrensschritt bei der Herstellung des Massedurchflußaufnehmers gemäß Fig. 1.

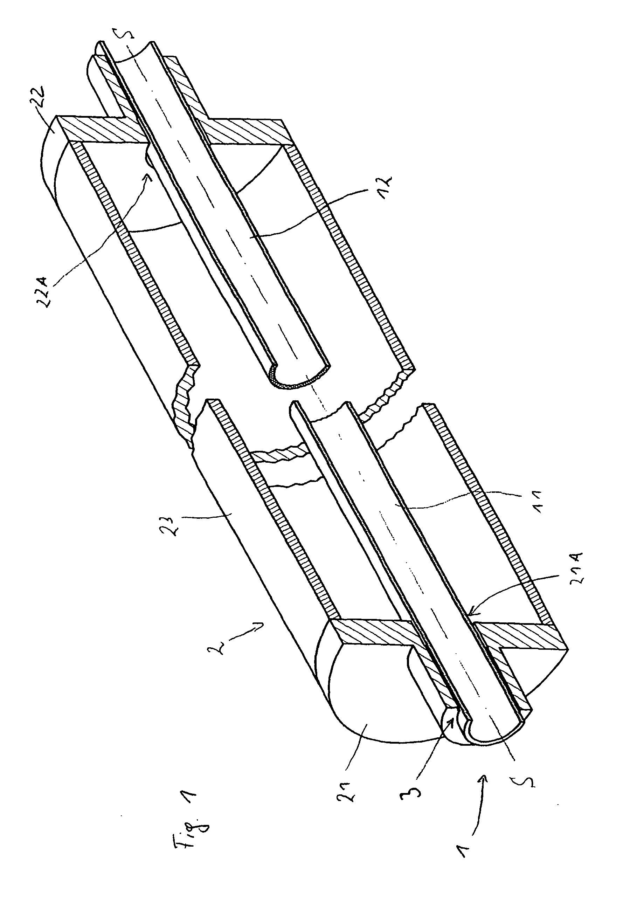

Für die Erfindung wichtig sind insb. die Fig. 1 der Zeichnung dargestellten Teile von Meßaufnehmern vom Vibrationstyp, z.B. eines Coriolis-Massedurchflußaufnehmers, während deren restliche und zur vollen Funktion ebenfalls erforderlichen Teile aus Übersichtlichkeitsgründen nicht dargestellt sind; insoweit wird auf die erwähnten Dokumente des Standes der Technik verwiesen.

Ein in ein Einlaßende eines hier nur teilweise gezeigten, im Betrieb vibrierenden Meßrohrs 1 mündendes gerades erstes Rohrsegment 11 ist von einer Bohrung 21A eines ersten Übergangsstücks 21 aufgenommen, während ein in ein Auslaßende des Meßrohrs 1 mündens gerades zweites Rohrsegment 12 in eine Bohrung 22A eines zweiten Übergangsstücks 22 gesteckt ist. Die Übergangsstücke 21, 22 bilden gemeinsam mit wenigstens einer seitlich angeordneten Trägerplatte 23 einen das wenigstens eine Meßrohr 1 schwingfähig einspannenden Träger 2. Dieser Träger 2 kann z.B. kastenförmig oder zylindrisch, insb. als ein das Meßrohr 1 umhüllendes Trägerrohr, ausgebildet sein.

Das Meßrohr 1 ist im Betrieb in den Verlauf einer von einem zu messenden Fluid, z.B. von einer Flüssigkeit oder von einem Gas, durchflossene Rohrleitung eingesetzt, wozu z.B. Flansche oder Verschraubungen etc. dienen können. Somit fließt das zu messende Fluid auch durch das Meßrohr 1.

Zum Erzeugen von das Fluid beschreibenden Reaktionskräften, z.B. mit dem Massedurchfluß korrelierte Corioliskräfte oder mit der Viskosität korreliert Reibungskräfte, wird das Meßrohr 1 im Betrieb zumindest zeitweise vibrierengelassen, wobei die beiden Rohrsemente 11, 12 zumindest anteilig Torsionsschwingungen um eine die beiden Rohrsegment 11, 12 imaginär verbinde Schwingungsachse S ausführen. Zum Erfassen von Vibrationen des Meßrohrs 1 und zum Erzeugen von mit diesen korrespondierenden Vibrationssignalen können in der dem Fachmann bekannten Weise entsprechende, hier nicht dargestellte, Schwingungssensoren in der Nähe des Meßrohrs 1 angebracht sein.

Um ein Verdrehen des Trägers gegen die Rohrsegmente 11, 12 und somit auch gegen das Meßrohr 1, insb. auch bei weiten Temperaturschwankungen ausgesetzem Meßaufnehmer, zu verhindern, weist erfindungsgemäß wenigstens eines der beiden Übergangsstücke 21, 22, hier gezeigt am Beispiel des Übergangsstücks 21, einen Anschlag 3 auf; selbstverständlich kann auch das andere Übergangsstück 22, insb. auch zusätzlich zum Anschlag 3, mit einem derartigen Anschlag versehen sein.

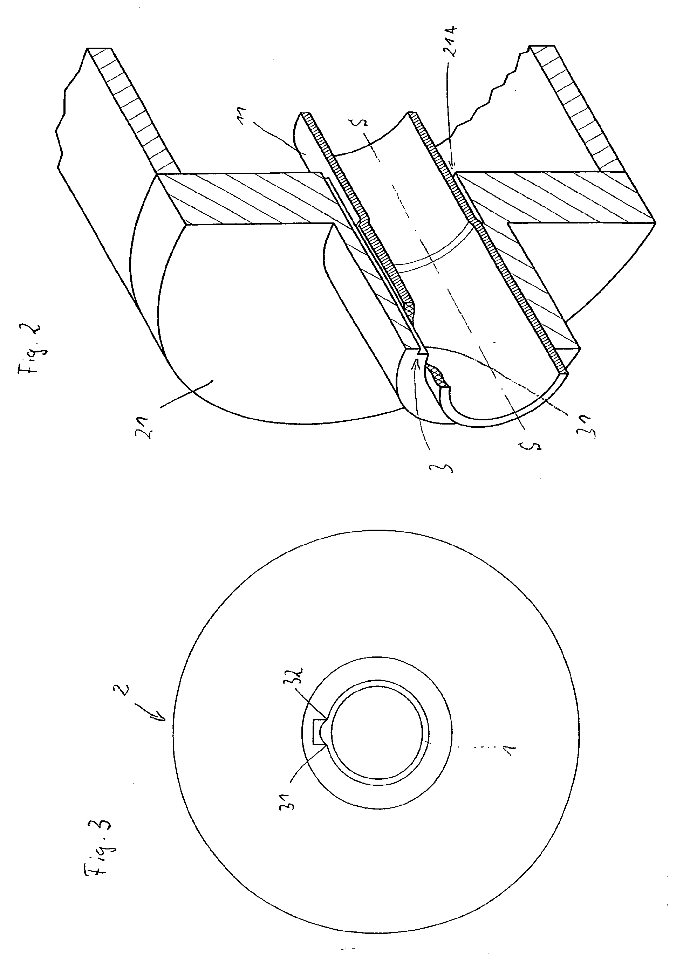

Der Anschlag 3 umfaßt, wie in Fig. 2 dargestellt, wenigstens eine das zugehörige Rohrsegment 11 teilweise kontaktierenden und zumindest abschnittsweise in Richtung der Schwingungsachse S verlaufenden Anschlagkante 31, die der zugehörigen Bohrung 21A aus- bzw. angeformt ist. Die Anschlagkante 31 kann hierbei, wie auch in Fig. 2 angedeutet, die Bohrung 21A praktisch vollständig durchstoßen; sie sich kann aber z.B. auch nur über einen kurzen Abschnitt der Bohrung 21A erstrecken.

Nach einer bevorzugten Ausgestaltung der Erfindung umfaßt der Anschlag 3 eine zweite Anschlagkante 32, die in vorteilhafter Weise so geformt und in der Bohrung 21A so angeordnet ist, daß der Anschlag 3 als eine von Wandmaterial des zugehörigen Rohrsegments 11 zumindest teilweise ausgefüllte Nut ausgebildet ist, vgl. Fig. 3.

Die Anschlagkante 32 kann aber z.B. auch so geformt und angeordnet sein, daß als Anschlag 3 eine von Wandmaterial des Rohrsegments 11 zumindest teilweise umgebenen Nase dient.

Für die in solchen Meßaufnehmern verwendeten, z.B. aus Titan, Edelstahl oder Zirkonium gefertigten Meßrohre, die üblicherweise eine Wandstärke zwischen 0,5 mm bis 2 mm aufweisen haben sich z.B. Nuttiefen von etwa 0,2 mm bei Nutbreiten zwischen 0,5 mm und 2 mm als ausreichend erwiesen.

Der Anschlags 3 wird bevorzugt mitels Räumnadel oder mittels Räumdorn in die vorgefertigte Bohrung 21A eingearbeitet. Selbstverständlich können aber auch andere dem Fachman bekannte Metallbearbeitungsverfahren, wie z.B. Fräsen oder Prägen, zur Herstellung des Anschlags 3 angewendet werden.

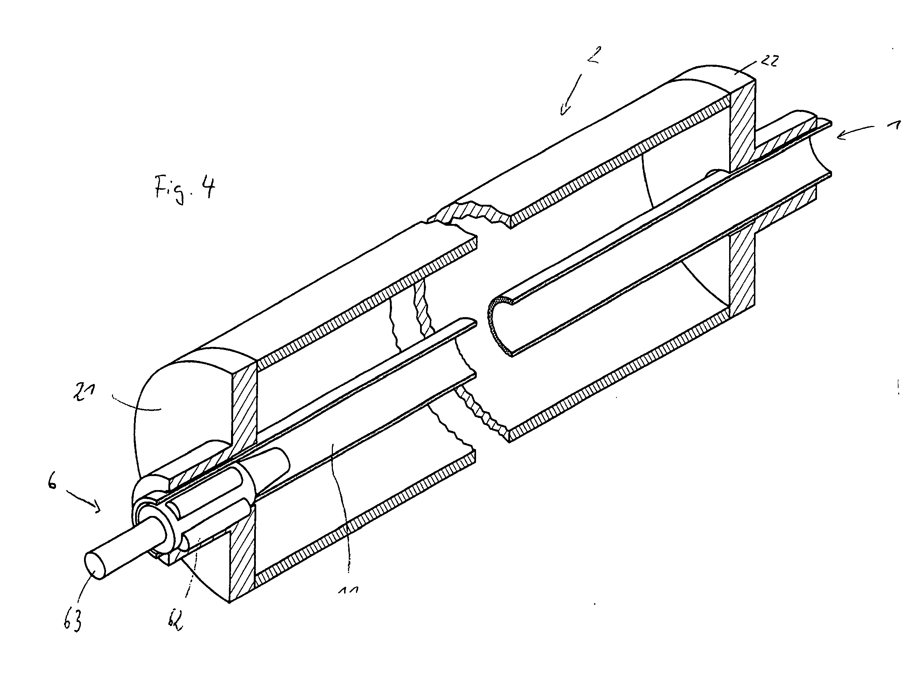

Zum Herstellen der mechanischen Verbindung zwischen dem Meßrohr 1 und dem Träger 2 werden, wie in Fig. 4 gezeigt, das Rohrsegment 11 in das Übergangsstück 21 und das Rohrsegment 12 in das Übergangsstück 22 eingelegt. Nach dem Positionieren des Rohrsegments 11 in das Übergangsstück 21 wird, wie in Fig. schematisch dargestellt, ein Walzwerkzeug 6 in das Lumen des Rohrsegments 11 zumindest teilweise eingebracht. Am in Einbringrichtung vorderen Ende trägt das Walzwerkzeug 6 einen Käfig mit auf dessen kreisförmige Mantelfläche verteilten und in entsprechende Öffnungen eingesetzten Rollen 62.

Der Mittelpunktskreis, auf dem die Rollen 62 sich beim Drehen des Walzwerkzeug 6 bewegen, hat einen Radius, der mittels eines in Einbringrichtung verschiebbaren Stempels 63 verstellt werden kann. Durch Vergrößern dieses Radius im Vergleich zu demjenigen Radius, mit dem das Walzwerkzeug 6 in das Lumen des Rohrsegments 11 zunächst eingeführt wird, läßt sich dieses abschnittsweise gegen die Innenwand der Bohrung 21A pressen.

Das Rohrsegment 11 wird nun mit der Innenwand der jeweiligen Bohrung 21A auf diese Weise ohne Wärmezufuhr verpreßt. Dadurch kommt es zu einem geringfügigen Fließen des Materials des Rohrsegments 11 und damit an diesen Stellen, insb. auch im Bereich des Anschlags, zu einer sehr festen mechanischen Verbindung zwischen Rohrsegment 11 und Übergangsstück 21. Der mittels des Walzwerkzeug 6 erzeugte Anpreßdruck sowie Form und Größe des Anschlags sind dabei so aufeinander abzustimmen, daß im Bereich des Anschlags 3 ausreichend viel Material vom Rohrsegment 11 fließen gelassen wird, vgl. hierzu auch Fig. 3.

Aufgrund der vorbeschriebenen plastischen Verformungen des Rohrsegments 11 kommt es partiell zu einem geringfügigen Dünnerwerden von dessen Wandstärke und somit einerseits zu einer mechanischen Druckpannung in Längsrichtung des Rohrsegments 11, im folgenden kurz Axialspannung genannt, da dieses geringfügig verlängert wird. Andererseits kommt es auch innerhalb der Bohrung 21A zu einer mechanischen Druckspannung in Radialrichtung, im folgenden kurz Radialspannung genannt. Die Radialspannung ist darauf zurückzuführen, daß während des Verpressens zwar das Rohrsegment 11 plastisch, dagegen das Übergangsstück 21 wegen seiner gegenüber der Wandstärke des Rohrsegment 11 viel größeren Dicke im wesentlichen nur elastisch verformt wird und daß daher nach dem Verpressen das Übergangsstück 21 eine zum Lumen des Rohrsegments 11 gerichtete Radialkraft ausübt.

Die Radialspannung ist nun in erster Linie der Grund dafür, daß die hinderliche Spannungsriß-Korrosion praktisch vermieden werden kann, wie sie z.B. bei Meßaufnehmern mit an den Träger gelötem oder eingeschweißtem Meßrohr immer wieder auftreten kann. Die Axialspannung trägt in demgegenüber weit geringerem Masse ebenfalls zu dieser Vermeidung bei. Bei Meßaufnehmern mit mindestens zwei Meßrohren kann das Verpressen besonders vorteilhaft auch zum dynamischen, optimalen Ausbalancieren der Meßrohre dienen, vgl. hierzu auch die US-A 56 10 342.

Ein wesentlicher Vorteil der Erfindung ist darin zu sehen, daß unter Beibehaltung der Vorteile des bereits in der US-A 56 10 342 beschriebenen Verfahrens zur Herstellung von Meßaufnemem, nämlich das Meßrohr 1 unter Verzicht auf Schweiß - oder Lötverbindungen und somit unter Vermeidung von Wärmespannungen schonend am Träger 2 zu fixieren, auf sehr einfache Weise eine erhebliche Verbesserung der Festigkeit und insb. auch der Beständigkeit der mechanischen Verbindung zwischen Meßrohr 1 und Träger 2 erzielt werden kann.

## Patentansprüche

1. Meßaufnehmer vom Vibrationstyp, insb. zum Erzeugen von massedurchflußabhängigen Corioliskräften und/oder zum Erzeugen von viskositätsabhängigen Reibungskräften in strömenden Fluiden, welcher Meßaufnehmer umfaßt:
- wenigstens ein ein Einlaßende und ein Auslaßende aufweisendes, zumindest zeitweise vibrierendes Meßrohr (1) zum Führen eines Fluids,
-- wobei das Meßrohr (1) zum Hindurchströmenlassen des Fluids über ein in das Einlaßende mündendes, insb. gerades, erstes Rohrsegment (11) und über ein in das Auslaßende mündendes, insb. gerades, zweites Rohrsegment (12) mit einer angeschlossenen Rohrleitung kommuniziert und
-- wobei das Meßrohr (1) dafür eingerichtet ist, im Betrieb mechanische Schwingungen um eine die beiden Rohrsegmente (11, 12) imaginär verbindende Schwingungsachse (S) auszuführen, sowie
- einen Träger (2) zum schwingfähigen Haltern des Meßrohrs (1), der mittels eines ersten Übergangstücks (21) am ersten Rohrsegment (11) und mittels eines zweiten Übergangstücks (22) am zweiten Rohrsegment (12) fixiert ist,
**dadurch gekennzeichnet, dass** wenigstens eines der beiden Übergangsstücke (21, 22) einen Anschlag (3) mit einer das jeweils zugehörige Rohrsegment (11, 12) teilweise kontaktierenden und zumindest abschnittsweise in Richtung der Schwingungsachse (S) verlaufenden ersten Anschlagkante (31) aufweist, wobei der Anschlag (3) als eine zumindest teilweise vom Material des zugehörigen Rohrsegments (11, 12) umgebene Nase ausgebildet ist.

2. Meßaufnehmer nach dem vorherigen Anspruch, wobei das Messrohr (1) dafür eingerichtet ist, zum Erzeugen von das Fluid beschreibenden Reaktionskräften, insb. mit dem Massedurchfluss korrelierten Corioliskräfte oder mit der Viskosität korrelierten Reibungskräfte, im Betrieb zumindest zeitweise vibrierengelassen zu werden, derart, daß die beiden Rohrsemente (11, 12) zumindest anteilig Torsionsschwingungen um die die beiden Rohrsegment (11, 12) imaginär verbinde Schwingungsachse (S) ausführen.

3. Meßaufnehmer nach dem vorherigen Anspruch, wobei zum Verhindern eines Verdrehens des Trägers (2) gegen die Rohrsegmente (11, 12) sowohl das erste Übergangsstück (21) als auch das zweite Übergangsstück (22) jeweils einen Anschlag (3) aufweisen.

4. Meßaufnehmer vom Vibrationstyp, insb. zum Erzeugen von massedurchflußabhängigen Corioliskräften und/oder zum Erzeugen von viskositätsabhängigen Reibungskräften in strömenden Fluiden, welcher Meßaufnehmer umfaßt:
- wenigstens ein ein Einlaßende und ein Auslaßende aufweisendes, zumindest zeitweise vibrierendes Meßrohr (1) zum Führen eines Fluids,
-- wobei das Meßrohr (1) zum Hindurchströmenlassen des Fluids über ein in das Einlaßende mündendes, insb. gerades, erstes Rohrsegment (11) und über ein in das Auslaßende mündendes, insb. gerades, zweites Rohrsegment (12) mit einer angeschlossenen Rohrleitung kommuniziert und
-- wobei das Meßrohr (1) dafür eingerichtet ist, im Betrieb mechanische Schwingungen um eine die beiden Rohrsegmente (11, 12) imaginär verbindende Schwingungsachse (S) auszuführen, sowie
- einen Träger (2) zum schwingfähigen Haltern des Meßrohrs (1), der mittels eines ersten Übergangstücks (21) am ersten Rohrsegment (11) und mittels eines zweiten Übergangstücks (22) am zweiten Rohrsegment (12) fixiert ist,
**dadurch gekennzeichnet, dass** wenigstens eines der beiden Übergangsstücke (21, 22) einen Anschlag (3) mit einer das jeweils zugehörige Rohrsegment (11, 12) teilweise kontaktierenden und zumindest abschnittsweise in Richtung der Schwingungsachse (S) verlaufenden ersten Anschlagkante (31) aufweist,
- wobei der Anschlag (3) eine das jeweils zugehörige Rohrsegment (11, 12) teilweise kontaktierende und zumindest abschnittsweise in Richtung der Schwingungsachse verlaufende zweite Anschlagkante (32) aufweist, und
- wobei der Anschlag (3) als eine zumindest teilweise vom Material des zugehörigen Rohrsegments (11, 12) ausgefüllte Nut ausgebildet ist.

5. Meßaufnehmer nach Anspruch 4, wobei das Messrohr (1) dafür eingerichtet ist, zum Erzeugen von das Fluid beschreibenden Reaktionskräften, insb. mit dem Massedurchfluss korrelierten Corioliskräfte oder mit der Viskosität korrelierten Reibungskräfte, im Betrieb zumindest zeitweise vibrierengelassen zu werden, derart, daß die beiden Rohrsemente (11, 12) zumindest anteilig Torsionsschwingungen um die die beiden Rohrsegment (11, 12) imaginär verbinde Schwingungsachse (S) ausführen.

6. Meßaufnehmer nach Anspruch 5, wobei zum Verhindern eines Verdrehens des Trägers (2) gegen die Rohrsegmente (11, 12) sowohl das erste Übergangsstück (21) als auch das zweite Übergangsstück (22) jeweils einen Anschlag (3) aufweisen.

## Claims

1. Vibronic-type sensor, particularly designed to generate Coriolis forces which depend on the mass flow, and/or to generate viscosity-dependent friction forces in flowing fluids, said sensor comprising:
- at least one measuring tube (1) for conducting a fluid, said tube vibrating at least temporarily and having at least one inlet end and one outlet end,
-- wherein the measuring tube (1) communicates with a connected pipe for the purpose of allowing the fluid to flow via a first, particularly straight, tube segment (11) which ends in the inlet end, and via a second, particularly straight, tube segment (12) which ends in the outlet end, and
-- wherein the measuring tube (1) is equipped to perform mechanical vibrations during operation around an axis of vibration (S) which connects the two tube segments (11, 12) in an imaginary manner, as well as
- a support (2) designed to support the measuring tube (1) in a way that it can vibrate, said support being fixed to the first tube segment (11) via a first adapter piece (21) and being fixed to the second tube segment (12) via a second adapter piece (22),
**characterized in that** at least one of the two adapter pieces (21, 22) has a limit stop (3) with a first stop edge (31) which partially contacts the associated tube segment (11, 12) and extends at least in part in the direction of the axis of vibration (S), wherein the stop (3) is designed in the form of a nose surrounded at least partially by the material of the corresponding tube segment (11, 12).

2. Sensor as claimed in the previous Claim, wherein, for the purpose of generating reaction forces that describe the fluid, particularly Coriolis forces that correlate to the mass flow or friction forces that correlate to the viscosity, the measuring tube (1) is designed to be allowed vibrate at least temporarily during operation in such a way that the two tube segments (11, 12) perform, at least in part, torsional vibrations around the axis of vibration (S) which connects the two tube segments (11, 12) in an imaginary manner.

3. Sensor as claimed in the previous Claim, wherein both the first adapter piece (21) and the second adapter piece (22) have a limit stop (3) to prevent the support (2) from rotating against the tube segments (11, 12).

4. Vibronic-type sensor, particularly designed to generate Coriolis forces which depend on the mass flow, and/or to generate viscosity-dependent friction forces in flowing fluids, said sensor comprising:
- at least one measuring tube (1) for conducting a fluid, said tube vibrating at least temporarily and having at least one inlet end and one outlet end,
-- wherein the measuring tube (1) communicates with a connected pipe for the purpose of allowing the fluid to flow via a first, particularly straight, tube segment (11) which ends in the inlet end, and via a second, particularly straight, tube segment (12) which ends in the outlet end, and
-- wherein the measuring tube (1) is designed to perform mechanical vibrations during operation around an axis of vibration (S) which connects the two tube segments (11, 12) in an imaginary manner, as well as
- a support (2) designed to support the measuring tube (1) in a way that it can vibrate, said support being fixed to the first tube segment (11) via a first adapter piece (21) and being fixed to the second tube segment (12) via a second adapter piece (22),
**characterized in that** at least one of the two adapter pieces (21, 22) has a limit stop (3) with a first stop edge (31) which partially contacts the associated tube segment (11, 12) and extends at least in part in the direction of the axis of vibration (S)
- wherein the limit stop (3) has a second stop edge (32) which partially contacts the associated tube segment (11, 12) and extends at least in part in the direction of the axis of vibration
- wherein the limit stop (3) is designed as a groove which is at least partially filled by the material of the corresponding tube segment (11, 12).

5. Sensor as claimed in Claim 4, wherein, for the purpose of generating reaction forces that describe the fluid, particularly Coriolis forces that correlate to the mass flow or friction forces that correlate to the viscosity, the measuring tube (1) is designed to be allowed vibrate at least temporarily during operation in such a way that the two tube segments (11, 12) perform, at least in part, torsional vibrations around the axis of vibration (S) which connects the two tube segments (11, 12) in an imaginary manner.

6. Sensor as claimed in Claim 5, wherein both the first adapter piece (21) and the second adapter piece (22) have a limit stop (3) to prevent the support (2) from rotating against the tube segments (11, 12).

## Revendications

1. Capteur du type à vibrations, notamment destiné à la génération de forces de Coriolis dépendant du débit massique et/ou à la génération de forces de frottement dépendant de la viscosité dans des fluides en écoulement, lequel capteur comprend :
- au moins un tube de mesure (1) vibrant au moins temporairement, présentant une extrémité d'entrée et une extrémité de sortie,
-- pour lequel le tube de mesure (1) communique avec une conduite raccordée en vue de l'écoulement du fluide à travers un premier segment de tube (11), notamment droit, débouchant dans l'extrémité d'entrée et à travers un deuxième segment de tube (12), notamment droit, débouchant dans l'extrémité de sortie et
-- pour lequel le tube de mesure (1) est conçu de telle manière à exécuter en fonctionnement des vibrations mécaniques autour d'un axe de vibration (S) reliant de façon imaginaire les deux segments de tube (11, 12), ainsi que
- un support (2) destiné à supporter le tube de mesure (1) de manière qu'il puisse vibrer, lequel support est fixé au moyen d'une première pièce de transition (21) sur le premier segment de tube (11) et au moyen d'une deuxième pièce de transition (22) sur le deuxième segment de tube (12),
**caractérisé en ce qu'**au moins l'une des deux pièces de transition (21, 22) présente une butée (3) avec une première arête de butée (31) entrant au moins partiellement en contact avec le segment de tube (11, 12) correspondant et s'étendant au moins partiellement en direction de l'axe de vibration (S), la butée (3) étant conçue en forme de nez entouré au moins partiellement par le matériau du segment de tube (11, 12) correspondant.

2. Capteur selon la revendication précédente, pour lequel le tube de mesure (1) est conçu, en vue de la génération de forces de réaction décrivant le fluide, notamment les forces de Coriolis corrélées avec le débit massique ou les forces de frottement corrélées avec la viscosité, de manière à entrer, en fonctionnement, au moins temporairement en vibrations de telle sorte que les deux segments de tube (11, 12) exécutent au moins partiellement des vibrations torsionnelles autour de l'axe de vibration (S) reliant de façon imaginaire les deux segments de tube (11, 12)

3. Capteur selon la revendication précédente, pour lequel la première pièce de transition (21) et la deuxième pièce de transition (22) présentent chacune une butée (3) destinée à empêcher une rotation du support (2) contre les segments de tube (11, 12).

4. Capteur du type à vibrations, notamment destiné à la génération de forces de Coriolis dépendant du débit massique et/ou à la génération de forces de frottement dépendant de la viscosité dans des fluides en écoulement, lequel capteur comprend :
- au moins un tube de mesure (1) vibrant au moins temporairement, présentant une extrémité d'entrée et une extrémité de sortie,
-- pour lequel le tube de mesure (1) communique avec une conduite raccordée en vue de l'écoulement du fluide à travers un premier segment de tube (11), notamment droit, débouchant dans l'extrémité d'entrée et à travers un deuxième segment de tube (12), notamment droit, débouchant dans l'extrémité de sortie et
-- pour lequel le tube de mesure (1) est conçu de telle manière à exécuter en fonctionnement des vibrations mécaniques autour d'un axe de vibration (S) reliant de façon imaginaire les deux segments de tube (11, 12), ainsi que
- un support (2) destiné à supporter le tube de mesure (1) de manière qu'il puisse vibrer, lequel support est fixé au moyen d'une première pièce de transition (21) sur le premier segment de tube (11) et au moyen d'une deuxième pièce de transition (22) sur le deuxième segment de tube (12),
**caractérisé en ce qu'**au moins l'une des deux pièces de transition (21, 22) présente une butée (3) avec une première arête de butée (31) entrant au moins partiellement en contact avec le segment de tube (11, 12) correspondant et s'étendant au moins partiellement en direction de l'axe de vibration (S),
- pour lequel la butée (3) présente une deuxième arête de butée (32) entrant au moins partiellement en contact avec le segment de tube (11, 12) correspondant et s'étendant au moins partiellement en direction de l'axe de vibration (S) et
- pour lequel la butée (3) est conçue en forme de rainure remplie au moins partiellement par le matériau du segment de tube (11, 12) correspondant.

5. Capteur selon la revendication 4, pour lequel le tube de mesure (1) est conçu, en vue de la génération de forces de réaction décrivant le fluide, notamment les forces de Coriolis corrélées avec le débit massique ou les forces de frottement corrélées avec la viscosité, de manière à entrer, en fonctionnement, au moins temporairement en vibrations de telle sorte que les deux segments de tube (11, 12) exécutent au moins partiellement des vibrations torsionnelles autour de l'axe de vibration (S) reliant de façon imaginaire les deux segments de tube (11, 12).

6. Capteur selon la revendication 5, pour lequel la première pièce de transition (21) et la deuxième pièce de transition (22) présentent chacune une butée (3) destinée à empêcher une rotation du support (2) contre les segments de tube (11, 12).
